# EUROPEAN PATENT SPECIFICATION

(11) **EP 3 448 120 B1**
(45) Date of publication and mention of the grant of the patent: **12.10.2022**
(21) Application number: 17187257.5
(22) Date of filing: 22.08.2017
(51) Int. Cl.: H05B 6/12

(54) **COOKING HOB**
KOCHFELD
PLAQUE DE CUISSON

(43) Date of publication of application: 27.02.2019
(73) Proprietor: ELECTROLUX APPLIANCES AKTIEBOLAG, 105 45 Stockholm (SE)
(72) Inventor: KALLERT, Uwe, 91541 Rothenburg ob der Tauber (DE); MILANESI, Filippo, 47122 Forli (IT); WUNDLING, Holger, 91541 Rothenburg ob der Tauber (DE); KLEIN, Gerhard, 91541 Rothenburg ob der Tauber (DE)
(74) Representative: Electrolux Group Patents

(56) References cited:
- EP-A1- 1 575 336
- EP-A1- 3 139 702
- WO-A1-2016/139942
- FR-A1- 2 968 885
- US-A1- 2015 114 953

## Description

The present Invention refers to a cooking appliance, particularly a cooking hob, more particularly an induction hob. An induction hob according to the preamble of claim 1 is disclosed by WO 2016/139942 A1. A further induction hob is disclosed by EP 3 139 702 A1.

Such cooking appliances are provided for conducting a cooking process, comprising a cooking process for heating, e.g. baking, frying, boiling, foods. It is known in the art to provide heating power elements for transferring heat or heating power to the food stuff and / or a cooking vessel comprising a cooking liquid and / or food, for example a pan or pot. Such heating power transfer elements are arranged on a heating power transfer element carrier or heating power transfer element support.

Particularly in the area of cooking hobs, the heating power transfer elements (e.g. induction coils or radiation heaters) are supported by one carrier each. Particularly, it is known to provide one coil carrier to support one induction coil.

Such known arrangements, however, are disadvantageous, as manufacturing is time and material consuming and expensive.

In addition, the shielding between two or more induction coils is not possible or suboptimal. Shielding in this regard means shielding of EMV (electromagnetic field) and temperature. Accordingly, such coil carrier provides a shielding means for shielding the energy power unit (electronics, PCB) usually arranged below the coil from such EMV and temperature effects. On the other hand and vice versa, the coil carrier shields emission from the energy power unit (electronics, PCB) arranged below the coil away from the coils. One coil carrier per coil thereby is disadvantageous as there is a resulting gap between two of such coil carriers. The energy power unit may be particularly understood as a power board comprising a PCB with Generators, i.e. switching elements and rectifiers, filter coils, etc.

The present Invention turns away from said principle of providing one coil carrier per coil and solves advantageously these problems.

The present invention provides a cooking appliance, particularly a hob, more particularly an induction hob.

Below an induction coil there is arranged a shielding element.

The cooking appliance comprises at least one energy power unit for transferring heating power to at least one heating zone.

The energy power unit comprises preferably at least one generator for providing heating power to the at least one heating zone.

The heating power is be provided by heat generating power, particularly a heat generating magnetic field, more particularly an induction field. Accordingly, the cooking appliance preferably is an induction hob.

In one particular embodiment of the present invention the cooking appliance, particularly the hob, comprises at least one cooking zone. Such a cooking zone is associated with at least one heating zone. A heating zone corresponds to one heating power transfer element, e.g. a radiant heating element or an induction coil, which is arranged below the cooking panel, e.g. the glass ceramic plate.

In other words, a heating zone can only be driven by a specific power or heating level, whereas a cooking zone may comprise one or more than one heating zone, which can be driven with the same or a different power or heating level. A cooking zone comprises preferably at least one heating zone, more preferably at least two heating zones. In the present invention it is preferred that a cooking zone comprises two heating zones, which can be driven by the same or different power. Particularly, such cooking zone comprises or is associated with two heating power transfer elements.

The particularly preferred embodiment of the present invention considers that said two heating power transfer elements are arranged on and supported by one common heating power transfer element carrier (i.e. induction coil carrier plate).

Such a hob, preferably an induction hob, according to the present invention preferably comprises at least one energy power unit for transferring heating power to at least one heating zone. In the present invention it is preferred that all heating power transfer elements, which are arranged on and supported by a common heating power transfer element carrier (i.e. induction coil carrier plate), are driven by the same energy power unit.

A cooking zone comprises preferably at least one heating zone, more preferably at least two, still more preferably at least three heating zones. Additionally, or alternatively, the hob may be configured such that the number of heating zones associated with one cooking zone may vary dependent on the needs of the cook and/or the size, form or kind of cookware placed on the cooking surface.

The energy power unit comprises preferably at least one generator for providing heating power to the at least one heating zone. The heating power may be provided particularly by heat, more particularly by heat radiation. Alternatively or additionally, the heating power may be provided by heat generating power, particularly a heat generating magnetic field, more particularly an induction field. Accordingly, the inventive cooking hob is an induction hob.

Particularly, the energy power unit may be supported and arranged in a housing, preferably in a plastic housing. This allows easy manufacturing and modularization.

The energy power unit and particularly the associated power circuit unit may be configured to be connected to at least one, preferably two phases of a mains supply. Thereby the energy power unit may particularly be provided in the form of a half-bridge configuration and/or a quasi-resonant configuration.

Preferably, on the common coil carrier ferrite elements are arranged and supported by the common coil carrier. These ferrites may be glued or supported by ferrite support elements, e.g. Snap fit etc.

Preferably the shielding element is a mica sheet. The mica sheet preferably is adapted to the form of the coil. The mica shield preferably is provided above the ferrite elements. The mica sheet preferably in its's main function is a support for the copper windings of the coil. However, additionally the mica sheet may also shield temperature radiated from the above (Source pot bottom, direction: glass plate, coil). Below the coil carrier an additional shielding sheet may be arranged. Such additional shielding sheet may be also a mica sheet.

The coil carrier is supported by the housing of the energy power unit. Particularly, the housing may comprise supporting elements for supporting the coil carrier. Particularly, such supporting elements may comprise elastic means, e.g. springs or silicon elements, for elastically supporting the coil carrier, and particularly pressing the coils onto the bottom surface of the cooking plate, which particularly is a glass ceramic plate. There may be provided a further additional shielding sheet, above the coil (copper windings) and below the glass plate. This may particularly also be a mica sheet. Preferably, said shielding element is adapted in the form to the coils and/or coil carrier. Preferably, said shielding element is mounted on the common coil carrier. The coil as such is internally can have a shape of a "D" or oval-D. Such a coil can have the following structure: one coil, which can only be driven with the same power density or power level, comprises two winding structures, namely, an outer and an inner winding structure. Thereby the outer winding structure has the form of a capital "D", whereas the inner winding structure has the form of a small circle. The small circle preferably has a diameter, which is adapted to the inner space of the capital "D". The winding of the inner and the outer winding structure are connected in series. It is preferred that the inner and the outer winding structure have the same geometrical center point, wherein the "center point" of the D the circle center point of the circular part of the D.

In the present invention, the two coils on one coil carrier are arranged symmetrically to each other, preferably axisymmetric. More particularly, the two Ds are arranged axis symmetrically to each other, particularly such that the linear part of the Ds are in proximity to each other (d-b). In a preferred embodiment the coil of the present invention comprises a curvature. Preferably, the coil additionally comprises a linear part. Most preferably, the form of the coil is a D. This is particularly advantageous regarding manufacturing process. This is the case as the winding of the copper wires is facilitated, if the coil comprises a curvature.

One common coil carrier may support two, three, or more coils. One power board may support all coils on one coil carrier, or on two coil carriers, etc. All coils of one coil carrier are supported by one phase of the mains supply or are supported by more than one phase of the mains supply.

The cooking hob preferably carries or is associated with at least one, preferably one or two power boards, each power board comprising at least one, preferably one or two power generators, each power generator being associated to one induction coil. Each power generators preferably comprises at least one, preferably one or two switching elements, preferably insulated-gate bipolar transistors (IGBTs).

Each power generator can comprise an inverter adapted to convert a direct current voltage into an alternating current voltage to be applied to the induction coil.

The present invention will be described in further detail with reference to the accompanying drawing in which:

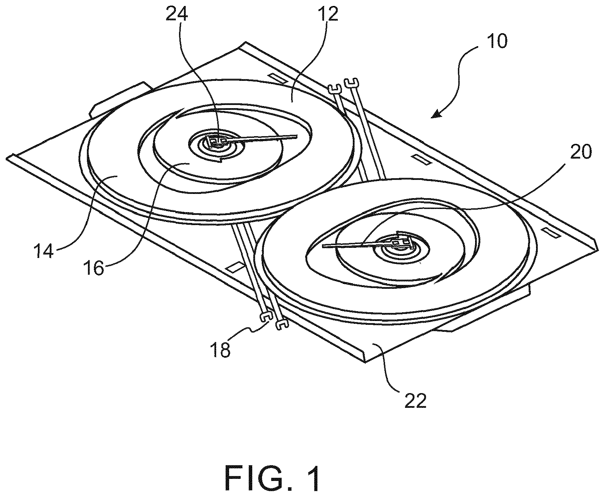

- Fig. 1:: illustrates a schematic perspective view onto heating power transfer element according to the present invention.

Fig. 1 shows elements of a cooking zone 10 according to the present invention. Cooking zone 10 comprises two heating zones 12 which can be bridged together so as to be driven by the same power or controlled separately from each other. Each heating zone 10 comprises an induction coil 15 which in turn comprises an outer D-shaped section 14 surrounding an inner circular section 16. The circular part of the D-shaped section 14 and circular section 16 are arranged on a common center 24. Both heating zones 12 are arranged on and supported by a common coil carrier 22. The windings of induction coil 15, i.e. the windings of circular section 16 and D-shaped section 14 are glued onto this common coil carrier 22 which reduces the production costs. A temperature sensor 20 is provided within each of the induction coils 15 of the respective heating zone 12 for controlling the temperature.

Both induction coils 15 of the two heating zones 12 are arranged adjacent to each other such that the straight or linear part of the D-shaped sections 14 are arranged parallel to each other and side by side. As a result the overall footprint of both induction coils 15 together defined by their respective D-shaped sections 14 is oval or elongated and therefore adapted to heat an elongated pot or pan.

The heating zones 12 and the circular and D-shaped sections 14, 16 of the induction coils 15 are arranged in a horizontal plane defined by the common coil carrier 22.

The Heating zones 12 can be covered by an insulation sheet followed a top plate made of mica.

Ferrites can be provided between the induction coils 15 and the common coil carrier 22 and can also be glued onto the common coil carrier 22.

An additional mica sheet can be provided between induction coils 15 the common coil carrier 22 (preferably above the ferrites mounted onto common coil carrier 22).

Common coil carrier 22 preferably is made of aluminum.

Each induction coil 15 is driven by a power board. Each power board can comprise one or more induction generators for providing electrical power to the induction coils 15. Whereas every coil 15 is associated with a specific induction generator, a power board can comprise more generators. As an example, one power board can be used to supply all induction coils 15 of one common coil carrier 22, such as two induction coils 15 as shown in Fig. 1, or even more than two induction coils. Connectors 18 are provided for connecting the induction coils 15 to a power board.

### List of reference signs

- 10: cooking zone
- 12: heating zone
- 14: D-shaped section
- 15: induction coil
- 16: circular section
- 18: connector
- 20: temperature sensor
- 22: common coil carrier
- 24: center

## Claims

1. An induction cooking hob, the induction cooking hob comprising at least two heating power transfer elements for transferring heating power to at least one heating zone (12);
at least two heating power transfer elements are arranged on and supported by a common heating power transfer element carrier;
wherein the cooking hob comprises induction coils (15), each induction coil being associated to one of the heating power transfer elements, wherein the common heating power transfer element carrier is a common coil carrier (22) and wherein the induction coils are supported by the common coil carrier;
**characterized in that**:
below the common coil carrier (22) a shielding sheet is arranged, wherein the shielding sheet is a mica sheet.

2. The induction cooking hob according to claim 1, wherein the induction cooking hob comprises at least one cooking zone, wherein each cooking zone is associated with at least one heating zone (12), and wherein each heating zone corresponds to one heating power transfer element.

3. The induction cooking hob according to anyone of the preceding claims, wherein the induction cooking hob comprises at least one energy power unit for transferring heating power to at least one heating zone (12), wherein preferably all heating power transfer elements, which are arranged on and supported by a common heating power transfer element carrier are driven by the same energy power unit.

4. The induction cooking hob according to anyone of the preceding claims, wherein under the induction coils (15) ferrite elements are arranged on and supported by the common coil carrier (22), and wherein the ferrites preferably are glued onto the common coil carrier or supported by ferrite support elements, preferably including a snap fit connection.

5. The induction cooking hob according to claim 3, wherein the energy power unit and particularly an associated power circuit unit is configured to be connected to at least one, preferably two phases of a mains supply and / or the energy power unit is provided in the form of a half-bridge configuration and / or a quasi-resonant configuration.

6. The induction cooking hob according to claim 4, wherein a shielding element is arranged below at least one induction coil (15), wherein the shielding element further preferably is adapted to the form of the coil and which preferably is provided above the ferrite elements, wherein the shielding element preferably is a mica sheet.

7. The induction cooking hob according to anyone of the preceding claims, wherein above the heating power transfer elements and below a cooking panel a shielding sheet is arranged which preferably is a mica sheet.

8. The induction cooking hob according to anyone of the preceding, wherein at least one induction coil (22) comprises a D-shaped section (14) of a coil winding.

9. The induction cooking hob according to claim 8, wherein the at least one induction coil (22) comprises an inner circular section (16) of the coil winding which is arranged within the D-shaped section (14) of the coil winding, the D-shaped section being arranged around the inner circular section.

10. The induction cooking hob according to claim 8 or claim 9, wherein one heating zone (12) comprises two D-shaped induction coils and wherein the two Ds are arranged axis symmetrically to each other, particularly such that the linear part of the Ds are parallel with in proximity to each other.

11. The induction cooking hob according to anyone of the preceding claims, wherein one or more common coil carriers (22) are provided wherein one common coil carrier supports a plurality of two, three, or more induction coils (15) and wherein at least one, preferably a plurality of power boards is provided each of them supporting one or more or all coils on one common coil carrier, wherein preferably all coils of one coil carrier are supported by one phase of the mains supply or are supported by more than one phase of the mains supply.

12. The induction cooking hob according to claim 4 and anyone of claims 5 to 11, wherein the ferrite elements and / or windings of the coils are glued onto one or more common coil carriers.

13. The induction cooking hob according to anyone of the preceding claims, wherein each common coil carrier (22) carries or is associated with at least one, preferably one or two power boards, each power board comprising:
at least one, preferably one or two power generators, each power generator being associated to one induction coil (15) and comprising:
at least one, preferably one or two switching elements, preferably insulated-gate bipolar transistors (IGBTs),
wherein each power generator comprises an inverter adapted to convert a direct current voltage into an alternating current voltage to be applied to the induction coil.

## Patentansprüche

1. Induktionskochfeld, wobei das Induktionskochfeld mindestens zwei Heizleistungsübertragungselemente zum Übertragen von Heizleistung zu mindestens einer Heizzone (12) umfasst;
wobei die mindestens zwei Heizleistungsübertragungselemente auf einem gemeinsamen Heizleistungsübertragungselementträger angeordnet sind und von diesem getragen werden;
wobei das Kochfeld Induktionsspulen (15) umfasst, jede Induktionsspule mit einem der Heizleistungsübertragungselemente verbunden ist, wobei der gemeinsame Heizleistungsübertragungselementträger ein gemeinsamer Spulenträger (22) ist, und wobei die Induktionsspulen vom gemeinsamen Spulenträger getragen werden;
**dadurch gekennzeichnet, dass**:
unter dem gemeinsamen Spulenträger (22) eine Abschirmplatte angeordnet ist, wobei die Abschirmplatte eine Glimmerplatte ist.

2. Induktionskochfeld nach Anspruch 1, wobei das Induktionskochfeld mindestens eine Kochzone umfasst, wobei jede Kochzone mit mindestens einer Heizzone (12) verbunden ist, und wobei jede Heizzone einem Heizleistungsübertragungselement entspricht.

3. Induktionskochfeld nach einem der vorhergehenden Ansprüche, wobei das Induktionskochfeld mindestens eine Energieleistungseinheit zum Übertragen von Heizleistung zu mindestens einer Heizzone (12) umfasst, wobei vorzugsweise alle Heizleistungsübertragungselemente, die auf einem gemeinsamen Heizleistungsübertragungselementträger angeordnet sind und von diesem getragen werden, durch dieselbe Energieleistungseinheit angesteuert werden.

4. Induktionskochfeld nach einem der vorhergehenden Ansprüche, wobei unter den Induktionsspulen (15) Ferritelemente angeordnet sind und vom gemeinsamen Induktionsspulenträger (22) getragen werden, und wobei die Ferrite vorzugsweise auf den gemeinsamen Spulenträger geklebt sind oder von Ferrittragelementen getragen werden, die vorzugsweise eine Schnappverbindung umfassen.

5. Induktionskochfeld nach Anspruch 3, wobei die Energieleistungseinheit und insbesondere eine verbundene Leistungsschaltungseinheit konfiguriert sind, um mit mindestens einer, vorzugsweise zwei Phasen einer Netzversorgung verbunden zu werden, und/oder die Energieleistungseinheit in Form einer Halbbrückenkonfiguration und/oder einer quasiresonanten Konfiguration vorgesehen ist.

6. Induktionskochfeld nach Anspruch 4, wobei ein Abschirmelement unter mindestens einer Induktionsspule (15) angeordnet ist, wobei das Abschirmelement vorzugsweise in Form der Spule ausgelegt und vorzugsweise über den Ferritelementen vorgesehen ist, wobei das Abschirmelement vorzugsweise eine Glimmerplatte ist.

7. Induktionskochfeld nach einem der vorhergehenden Ansprüche, wobei über den Heizleistungsübertragungselementen und unter einer Kochplatte eine Abschirmplatte angeordnet ist, die vorzugsweise eine Glimmerplatte ist.

8. Induktionskochfeld nach einem der vorhergehenden Ansprüche, wobei mindestens eine Induktionsspule (12) einen D-förmigen Abschnitt (14) einer Spulenwicklung umfasst.

9. Induktionskochfeld nach Anspruch 8, wobei die mindestens eine Induktionsspule (22) einen inneren Kreisabschnitt (16) der Spulenwicklung umfasst, der innerhalb des D-förmigen Abschnitts (14) der Spulenwicklung angeordnet ist, wobei der D-förmige Abschnitt um den inneren Kreisabschnitt angeordnet ist.

10. Induktionskochfeld nach Anspruch 8 oder 9, wobei eine Heizzone (12) zwei D-förmige Induktionsspulen umfasst, und wobei die zwei Ds achssymmetrisch zueinander angeordnet ist, derart dass insbesondere die geradlinigen Teile der Ds in der Nähe zueinander parallel sind.

11. Induktionskochfeld nach einem der vorhergehenden Ansprüche, wobei ein oder mehrere gemeinsame Spulenträger (22) vorgesehen sind, wobei ein gemeinsamer Spulenträger eine Mehrzahl von zwei, drei oder mehr Induktionsspulen (15) trägt, und wobei mindestens eine, vorzugsweise mehrere Netzteilkarten vorgesehen ist und jede von ihnen eine oder mehrere oder alle Spulen auf einem gemeinsamen Spulenträger trägt, wobei vorzugsweise alle Spulen eines Spulenträgers durch eine Phase der Hauptversorgung unterstützt werden oder durch mehr als eine Phase der Hauptversorgung unterstützt werden.

12. Induktionskochfeld nach Anspruch 4 und einem der Ansprüche 5 bis 11, wobei die Ferritelemente und/oder die Wicklungen der Spulen auf einen oder mehrere gemeinsame Spulenträger geklebt sind.

13. Induktionskochfeld nach einem der vorhergehenden Ansprüche, wobei jeder gemeinsame Spulenträger (22) mindestens eine, vorzugsweise eine oder zwei Netzteilkarten trägt oder damit assoziiert ist, wobei jede Netzteilkarte umfasst:
mindestens einen, vorzugsweise einen oder zwei Leistungsgeneratoren, wobei jeder Leistungsgenerator mit einer Induktionsspule (15) verbunden ist und umfasst:
mindestens ein, vorzugsweise ein oder zwei Schaltelemente, vorzugsweise Bipolartransistoren mit isolierter Gateelektrode (IGBTs),
wobei jeder Leistungsgenerator einen Wechselrichter umfasst, der so ausgelegt ist, dass er eine Gleichstromspannung in eine Wechselstromspannung umwandelt.

## Revendications

1. Plaque de cuisson à induction, la plaque de cuisson à induction comprenant au moins deux éléments de transfert de puissance de chauffage pour transférer de la puissance de chauffage à au moins une zone de chauffage (12) ;
l'au moins deux éléments de transfert de puissance de chauffage étant disposés sur et supportés par un support d'éléments de transfert de puissance de chauffage commun ;
la plaque de cuisson comprenant des bobines d'induction (15), chaque bobine d'induction étant associée à l'un des éléments de transfert de puissance de chauffage, le support d'éléments de transfert de puissance de chauffage commun étant un support de bobines commun (22) et les bobines d'induction étant supportées par le support de bobines commun ;
**caractérisée en ce que** :
une feuille de blindage est disposée au-dessous du support de bobines commun (22), la feuille de blindage étant une feuille de mica.

2. Plaque de cuisson à induction selon la revendication 1, la plaque de cuisson à induction comprenant au moins une zone de cuisson, chaque zone de cuisson étant associée à au moins une zone de chauffage (12), et chaque zone de chauffage correspondant à un élément de transfert de puissance de chauffage.

3. Plaque de cuisson à induction selon l'une quelconque des revendications précédentes, la plaque de cuisson à induction comprenant au moins une unité d'alimentation en énergie pour transférer de la puissance de chauffage à au moins une zone de chauffage (12), tous les éléments de transfert de puissance de chauffage qui sont disposés sur et supportés par un support d'éléments de transfert de puissance de chauffage commun étant de préférence alimentés par la même unité d'alimentation en énergie.

4. Plaque de cuisson à induction selon l'une quelconque des revendications précédentes dans laquelle, au-dessous des bobines d'induction (15), des éléments en ferrite sont disposés sur et supportés par le support de bobines commun (22), et dans laquelle les ferrites sont de préférence collées sur le support de bobines commun ou supportées par des éléments de support en ferrite, de préférence comportant un raccord encliquetable.

5. Plaque de cuisson à induction selon la revendication 3, dans laquelle l'unité d'alimentation en énergie et en particulier une unité de circuit d'alimentation associée est configurée pour être branchée à au moins une, de préférence deux phases d'une alimentation secteur et/ou l'unité d'alimentation en énergie est fournie sous la forme d'une configuration de demi-pont et/ou une configuration quasi-résonante.

6. Plaque de cuisson à induction selon la revendication 4, dans laquelle un élément de blindage est disposé au-dessous d'au moins une bobine d'induction (15), dans laquelle l'élément de blindage est en outre de préférence adapté à la forme de la bobine et il est de préférence disposé au-dessus des éléments en ferrite, dans laquelle l'élément de blindage est de préférence une feuille de mica.

7. Plaque de cuisson à induction selon l'une quelconque des revendications précédentes dans laquelle, au-dessus des éléments de transfert de puissance de chauffage et au-dessous d'un panneau de cuisson, est disposée une feuille de blindage qui est de préférence une feuille de mica.

8. Plaque de cuisson à induction selon l'une quelconque des revendications précédentes, dans laquelle au moins une bobine d'induction (22) comprend une section en forme de D (14) d'un enroulement de bobine.

9. Plaque de cuisson à induction selon la revendication 8, dans laquelle l'au moins une bobine d'induction (22) comprend une section circulaire interne (16) de l'enroulement de bobine qui est disposée à l'intérieur de la section en forme de D (14) de l'enroulement de bobine, la section en forme de D étant disposée autour de la section circulaire interne.

10. Plaque de cuisson à induction selon la revendication 8 ou la revendication 9, dans laquelle une zone de chauffage (12) comprend deux bobines d'induction en forme de D et dans laquelle les deux D sont disposés en symétrie axiale l'un par rapport à l'autre, en particulier de telle sorte que les parties linéaires des D sont parallèles l'une à l'autre et à proximité l'une de l'autre.

11. Plaque de cuisson à induction selon l'une quelconque des revendications précédentes, dans laquelle un ou plusieurs supports de bobines communs (22) sont prévus, dans laquelle un support de bobines commun supporte une pluralité de deux ou trois bobines d'induction (15) ou plus, et dans laquelle au moins une, de préférence une pluralité de cartes d'alimentation est prévue, chacune d'elles supportant une ou plusieurs ou toutes les bobines sur un support de bobines commun, de préférence dans laquelle toutes les bobines d'un support de bobines sont supportées par une phase de l'alimentation secteur ou sont supportées par plus d'une phase de l'alimentation secteur.

12. Plaque de cuisson à induction selon la revendication 4 et l'une quelconque des revendications 5 à 11, dans laquelle les éléments en ferrite et/ou les enroulements des bobines sont collés sur un ou plusieurs supports de bobines communs.

13. Plaque de cuisson à induction selon l'une quelconque des revendications précédentes, dans laquelle chaque support de bobines commun (22) supporte ou est associé à au moins une, de préférence une ou deux cartes d'alimentation, chaque carte d'alimentation comprenant :
au moins un, de préférence un ou deux générateurs électriques, chaque générateur électrique étant associé à une bobine d'induction (15) et comprenant :
au moins un, de préférence un ou deux éléments de commutation, de préférence des transistors bipolaires à grille isolée (IGBT),
dans laquelle chaque générateur électrique comprend un onduleur adapté pour convertir une tension en courant continu en une tension en courant alternatif devant être appliquée à la bobine d'induction.
